# EUROPÄISCHE PATENTANMELDUNG

(11) **EP 1 529 691 A1**
(43) Veröffentlichungstag der Anmeldung: **11.05.2005**
(21) Anmeldenummer: 03025823.0
(22) Anmeldetag: 10.11.2003
(51) Int. Cl.: B60R 13/02, B64C 1/12, B64D 11/00

(54) **Verkleidung für ein Fahrzeug**

(71) Anmelder: Goodrich Hella Aerospace Lighting Systems GmbH, 59557 Lippstadt (DE)
(72) Erfinder: Harasta, Stefan, 33106 Paderborn (DE)
(74) Vertreter: Hilleringmann, Jochen, Dipl.-Ing.

(57) **Zusammenfassung**

Die Verkleidung für ein Fahrzeug, insbesondere für den Innenraum eines Fahrzeuges, z.B. zur Anbringung oberhalb von Sitzreihen eines Flugzeuges, ist mit einem Verkleidungselement (22) versehen, das eine im eingebauten Zustand dem Innenraum des Fahrzeuges zugewandte Vorderseite (30) und eine Rückseite (34) aufweist. Ferner weist die Verkleidung eine an der Rückseite (34) des Verkleidungselements (22) angebrachte Versteifungsstrebe (42) zur Erhöhung der Steifigkeit des Verkleidungselements (22) auf. Die Versteifungsstrebe (42) ist steckbar und unverlierbar mit dem Verkleidungselement (22) verbunden.

## Beschreibung

Die Erfindung betrifft eine Verkleidung für ein Fahrzeug, insbesondere für den Innenraum eines Fahrzeuges, wobei es sich bei dem Fahrzeug vorzugsweise um ein Luftfahrzeug handelt.

Für die Verkleidung, insbesondere Innenverkleidung von Fahrzeugen, wie beispielsweise Flugzeugen, werden Verkleidungselemente (zumeist aus Kunststoff) eingesetzt, die an Haltestrukturen des Fahrzeuges befestigt sind. So werden beispielsweise die Verkleidungselemente oberhalb der Sitzfläche in einem Flugzeug an Schienen befestigt, und zwar mittels spezieller Befestigungselemente, die an den Verkleidungselementen angebracht sind. Oberhalb der Sitzplätze befinden sich mehrere unterschiedliche Verkleidungselemente und Verkleidungseinheiten, die beispielsweise die Sauerstoffmasken umfassen oder aber Leseleuchten, Luftdüsen, Hinweisanzeigen und Taster oder dergleichen Bedienelemente beinhalten. Die letztgenannten Einheiten werden auch als PSU-Einheiten (Passenger Service Unit) bezeichnet.

Pro Sitzreihe befinden sich oberhalb der Sitzplätze Verkleidungselemente bzw. Verkleidungseinheiten der zuvor genannten Art. Je nach Sitzreihenabstand befinden sich zwischen diesen Verkleidungseinheiten weitere Verkleidungselemente, die man auch als Ausgleichspaneele bzw. "Infill"-Panel bezeichnet. Diese Verkleidungselemente sind vergleichsweise leichtgewichtig und verfügen aus Vereinfachungsgründen zum Teil nicht über eigene Befestigungssysteme zur direkten Befestigung an der Haltestruktur des Fahrzeuges, an der die anderen Verkleidungselemente bzw. -einheiten befestigt sind.

Je nach den Längenabmessungen derartiger Verkleidungselemente können diese recht instabil bzw. wenig formstabil sein. Ein Grund dafür ist die Materialwahl, bei der es sich um einen leichtgewichtigen Werkstoff wie beispielsweise Kunststoff handelt.

Zur Erhöhung der Steifigkeit existieren im Stand der Technik Verkleidungselemente, auf deren Rückseite Versteifungsstreben durch Verkleben angebracht sind. Die Versteifungsstreben bestehen aus einem Leichtmetall wie beispielsweise Aluminium bzw. einer Aluminiumlegierung.

Die Herstellung derartig versteifter Verkleidungselemente ist recht aufwendig.

Eine Aufgabe der Erfindung ist es, eine Verkleidung für ein Fahrzeug und insbesondere für den Innenraum eines Fahrzeuges zu schaffen, das auf vereinfachte Art und Weise hergestellt werden kann, wobei insbesondere die Verbindung aus Versteifungsstrebe und Verkleidungselement vereinfacht ist.

Zur Lösung dieser Aufgabe wird mit der Erfindung eine Verkleidung für ein Fahrzeug, insbesondere für den Innenraum eines Fahrzeuges, z.B. zur Anbringung oberhalb von Sitzreihen eines Flugzeuges, vorgeschlagen, die versehen ist mit
- einem Verkleidungselement, das eine im eingebauten Zustand dem Innenraum des Fahrzeuges zugewandte Vorderseite und eine Rückseite aufweist, und
- einer an der Rückseite des Verkleidungselements angebrachten Versteifungsstrebe zur Erhöhung der Steifigkeit des Verkleidungselements,
- wobei die Versteifungsstrebe steckbar und unverlierbar mit dem Verkleidungselement verbunden ist.

Nach der Erfindung ist also zwischen der Versteifungsstrebe und dem Verkleidungselement eine mechanische Steckverbindung vorgesehen. Hierbei können die beiden Teile entweder durch eine Bewegung quer zur Ebene der Rückseite oder parallel zur Ebene der Rückseite gefügt werden. In beiden Fällen entsteht ein form- oder reibschlüssiger Verbund, der für den unverlierbaren Halt (Sicherung gegen ein unbeabsichtigtes Ablösen) sorgt.

Bei dem Material für das Verkleidungselement handelt es sich vorzugsweise um ein Kunststoffmaterial, während das Material, aus dem die Versteifungsstrebe besteht, ein Leichtmetall (z.B. Aluminium oder Aluminiumlegierung) sein kann. Vorzugsweise besteht aber auch die Versteifungsstrebe aus einem Kunststoffmaterial.

In vorteilhafter Weiterbildung der Erfindung ist vorgesehen, dass sich die beiden zu verbindenden Teile nach Art einer Nut-Feder- oder Schwalbenschwanz-Verbindung fügen lassen. Wenn die beiden Teile parallel zur Rückseite des Verkleidungselements gegeneinander verschoben werden, so ist das Querschnittsprofil der Steckvorsprünge der Versteifungsstrebe komplementär zum Querschnittsprofil der Steckaufnahmeräume des Verkleidungselements.

Werden die beiden zu verbindenden Teile rechtwinklig zur Rückseite aufeinander zu bewegt, so erfolgt die Steckverbindung ähnlich wie bei einem Steckkontakt. Durch Rastnasen o.dgl. Formschlusselemente lässt sich dann die dauerhafte kraftschlüssige Verbindung realisieren. Alternativ ist auch ein Reibschluss möglich. Diese beiden Varianten eines kraftschlüssigen Verbundes sind auch bei der zuvor beschriebenen alternativen Zusammenfügung der beiden Teile möglich.

In vorteilhafter Weiterbildung der Erfindung ist ferner vorgesehen, dass die Versteifungsstrebe und das Verkleidungselement unter Zuhilfenahme von Verkrallungselementen fest miteinander verbunden werden. Die Verkrallungselemente (beispielsweise aus Metall) weisen nach Widerhaken ausgebildete Vorsprünge auf, die sich einerseits an der Versteifungsstrebe und andererseits an dem Verkleidungselement verkrallen.

In vorteilhafter Weiterbildung ist vorgesehen, dass die Versteifungsstrebe dem Verkleidungselement zugewandte Steckvorsprünge aufweist, die von Steckaufnahmeräumen an der Rückseite des Verkleidungselements aufgenommen sind.

Vorzugsweise sind die Steckaufnahmeräume jeweils durch von der Rückseite des Verkleidungselements aufragende Krägen gebildet.

Bei einer weiteren Ausgestaltung der Erfindung weist die Versteifungsstrebe Abstützpunkte zur Abstützung an der Rückseite des Verkleidungselements in dem an diesem angebrachten Zustand auf. Bei diesen Abstützpunkten kann es sich beispielsweise um einfache Kontaktflächen zwischen Teilen der Versteifungsstrebe und dem Verkleidungselement handeln. An diesen Stellen liegt dann kein kraftschlüssiger Verbund vor. Dafür sind aber andere Bereiche von Versteifungsstrebe und Verkleidungselement so, wie nach der Erfindung vorgesehen, kraftschlüssig verbunden. Alternativ fallen die Abstützpunkte mit den Steckverbindungspunkten zusammen.

Vorzugsweise weist das Verkleidungselement eine Längserstreckung auf und verläuft die Versteifungsstrebe parallel zur Längserstreckung des Verkleidungselements.

Bei einer weiteren Ausgestaltung der Erfindung weist die Versteifungsstrebe einen im wesentlichen geradlinigen oder leicht gekrümmten Randabschnitt und einen diesem gegenüberliegenden konvex gekrümmten Randabschnitt auf, wobei der im wesentlichen geradlinige bzw. schwach konvex gekrümmte Randabschnitt im an dem Verkleidungselement angebrachten Zustand dessen Rückseite zugewandt ist.

Gemäß einer weiteren vorteilhaften Ausgestaltung der Erfindung sind zwischen der Versteifungsstrebe und dem Verkleidungselement Verkrallungselemente angeordnet, über die die Versteifungsstrebe mit dem Verkleidungselement verbunden ist.

Die Erfindung wird nachfolgend anhand der Zeichnung näher erläutert. Im einzelnen zeigen:
Fig. 1 einen Teilschnitt durch die Kabine eines Flugzeuges zur Verdeutlichung der Anbringung von Verkleidungselementen oberhalb der Flugzeugsitze,
Fig. 2 eine perspektivische Ansicht eines Verkleidungselements mit angebrachter Versteifungsstrebe auf die Rückseite des Verkleidungselements,
Fig. 3 eine Explosionsdarstellung des Verkleidungselements gemäß Fig. 2 in Seitenansicht,
Fig. 4 einen Schnitt entlang der Linie IV-IV der Fig. 2 und
Fig. 5 eine perspektivische Darstellung eines Verkrallungselements zur Zwischenschaltung zwischen der Versteifungsstrebe und dem Verkleidungselement.

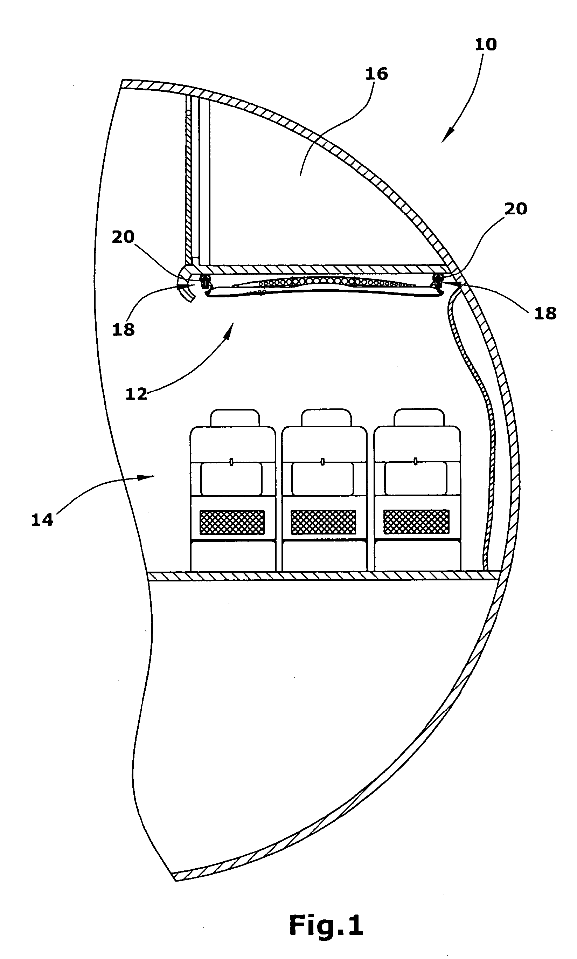

Fig.1 zeigt einen Teilquerschnitt durch eine Flugzeugkabine 10, die mit der erfindungsgemäßen Verkleidung bzw. einem erfindungsgemäßen Verkleidungselement gemäß dem hier beschriebenen Ausführungsbeispiel versehen ist. Wie anhand von Fig. 1 zu erkennen ist, ist die Verkleidung 12 oberhalb der Sitzreihen 14 angeordnet, und zwar unterhalb der Gepäckablagefächer 16. Die einzelnen Elemente der Verkleidung 12 weisen unterschiedliche Größe und Bestückung auf. So sind beispielsweise diejenigen Verkleidungselemente, in denen Leseleuchten, Lüftungsdüsen, Schalter bzw. Sacherstoffmasken integriert sind (auch mit erste Verkleidungselemente bzw. Verkleidungselemente vom ersten Typ bezeichnet), über spezielle Befestigungselemente 18 an C-förmigen Halteprofilen 20 befestigt, während leichtgewichtige kleine und schmale Verkleidungselemente (mit zweite Verkleidungselemente bzw. Verkleidungselemente vom zweiten Typ bezeichnet) an jeweils ein erstes Verkleidungselement angehängt sind, selbst also nicht direkt mit den C-förmigen Halteprofilen 20 verbunden sind.

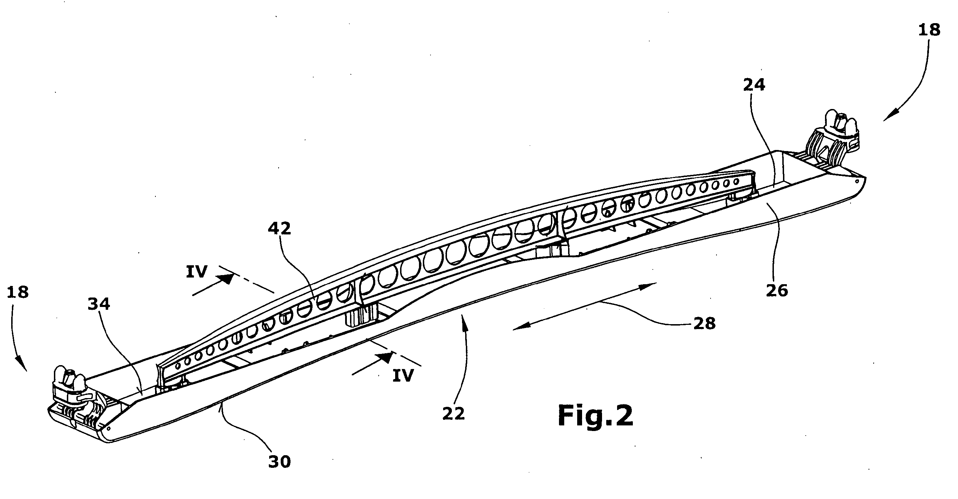

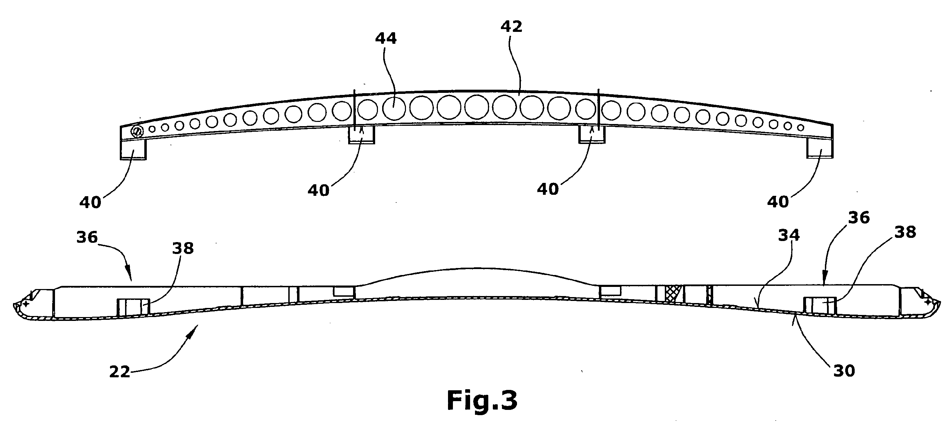

Ein Beispiel für ein Verkleidungselement 22 der Verkleidung 12 ist in den Fign. 2 und 3 gezeigt. In diesem Ausführungsbeispiel handelt es sich um ein sogenanntes Infill-Paneel. Grundsätzlich lässt sich aber jedes Verkleidungselement einer Flugzeuginnenraumverkleidung oder allgemein einer Fahrzeugverkleidung erfindungsgemäß ausführen.

Das Verkleidungselement 22 weist eine Wand 24 mit einem umlaufenden hochstehenden Rand 26 auf. An den in Längserstreckung 28 liegenden Schmalenden befinden sich die Befestigungselemente 18, mit denen das Verkleidungselement 22 an der Haltestruktur des Flugzeuges befestigt wird. Die in Fig. 2 untere Seite der Platte 24 bildet die Vorderseite 30, während die in Fig. 2 obere Seite die Rückseite 34 des Verkleidungselements 22 bildet.

An der Rückseite 34 des Verkleidungselements 22 befinden sich mehrere (in diesem Ausführungsbeispiel vier) Steckaufnahmeräume 36, die jeweils durch einen umlaufenden in der Draufsicht im wesentlichen rechteckigen Kragen 38 gebildet sind. Von diesen Steckaufnahmeräumen 36 sind Steckvorsprünge 40 einer in diesem Ausführungsbeispiel im wesentlichen bogenförmig ausgebildeten Versteifungsstrebe 42 aufgenommen. Bei dieser Versteifungsstrebe 42 handelt es sich in diesem Ausführungsbeispiel um ein Element mit einem Doppel-T-Querschnitt, von denen der eine Querbalken, bezogen auf den eingebauten Zustand, leicht konvex von der Rückseite 34 des Verkleidungselements 22 weg vorgewölbt ist, während der zweite Querbalken stärker konvex gewölbt ist. Zur Gewichtseinsparung ist der die beiden Querbalken verbindende Längsbalken der Versteifungsstrebe 42 mit einer Vielzahl von Löchern 44 versehen.

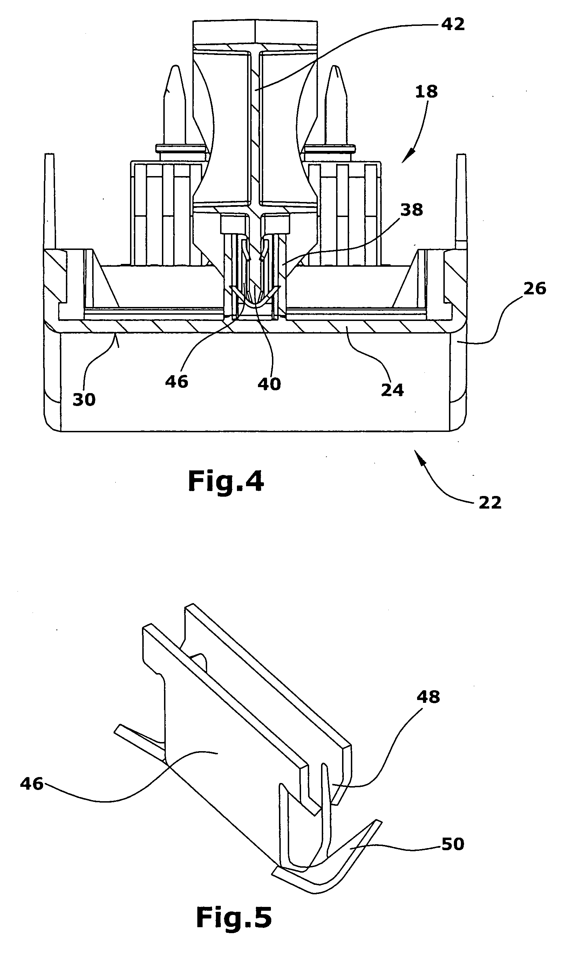

In die Aufnahmeräume 36 sind ferner U-klammerförmige Verkrallungselemente 46 eingesetzt, wie sie beispielsweise in Fign. 4 und 5 gezeigt sind. Das Verkrallungselement 46 besteht aus Metall und weist innenliegende Verhakungselemente 48 und außenliegende Verhakungselemente 50 auf. Die innenliegenden Verhakungselemente 48 greifen außen an den Steckvorsprüngen 40 der Versteifungsstrebe 42 an, während die außenliegenden Verhakungselemente 50 von innen an den Krägen 38 der Steckaufnahmeräume 36 angreifen (siehe Fig. 4). Beide Verhakungselemente 48 und 50 arbeiten vorzugsweise nach dem Widerhakenprinzip, so dass der sichere Halt der Versteifungsstrebe 42 an dem Verkleidungselement 22 gewährleistet ist.

## Patentansprüche

1. Verkleidung für ein Fahrzeug, insbesondere für den Innenraum eines Fahrzeuges, z.B. zur Anbringung oberhalb von Sitzreihen eines Flugzeuges, mit
- einem Verkleidungselement (22), das eine im eingebauten Zustand dem Innenraum des Fahrzeuges zugewandte Vorderseite (30) und eine Rückseite (34) aufweist, und
- einer an der Rückseite (34) des Verkleidungselements (22) angebrachten Versteifungsstrebe (40) zur Erhöhung der Steifigkeit des Verkleidungselements (22),
- wobei die Versteifungsstrebe (42) steckbar und unverlierbar mit dem Verkleidungselement (22) verbunden ist.

2. Verkleidung nach Anspruch 1, **dadurch gekennzeichnet, dass** die Versteifungsstrebe (42) dem Verkleidungselement (22) zugewandte Steckvorsprünge (40) aufweist, die von Steckaufnahmeräumen (36) an der Rückseite (34) des Verkleidungselements (22) aufgenommen sind.

3. Verkleidung nach Anspruch 2, **dadurch gekennzeichnet, dass** die Steckaufnahmeräume (36) jeweils durch von der Rückseite (34) des Verkleidungselements (22) aufragende Krägen (38) gebildet sind.

4. Verkleidung nach einem der Ansprüche 1 bis 3, **dadurch gekennzeichnet, dass** die Versteifungsstrebe (42) Abstützpunkte zur Abstützung an der Rückseite (34) des Verkleidungselements (22) in dem an diesem angebrachten Zustand aufweist.

5. Verkleidung nach Anspruch 4, **dadurch gekennzeichnet, dass** die Abstützpunkte mit den Steckverbindungspunkten zusammenfallen.

6. Verkleidung nach einem der Ansprüche 1 bis 5, **dadurch gekennzeichnet, dass** das Verkleidungselement (22) eine Längserstreckung aufweist und dass die Versteifungsstrebe (42) parallel zur Längserstreckung des Verkleidungselements (22) verläuft.

7. Verkleidung nach einem der Ansprüche 1 bis 6, **dadurch gekennzeichnet, dass** die Versteifungsstrebe (42) einen im wesentlichen geradlinigen oder leicht gekrümmten Randabschnitt und einen diesem gegenüberliegenden konvex gekrümmten Randabschnitt aufweist und dass der im wesentlichen geradlinige bzw. schwach konvex gekrümmte Randabschnitt im an dem Verkleidungselement (22) angebrachten Zustand dessen Rückseite (34) zugewandt ist.

8. Verkleidung nach einem der Ansprüche 1 bis 7, **dadurch gekennzeichnet, dass** zwischen der Versteifungsstrebe (42) und dem Verkleidungselement (22) Verkrallungselemente (46) angeordnet sind, über die die Versteifungsstrebe (42) mit dem Verkleidungselement (22) verbunden ist.

9. Verkleidung nach einem der Ansprüche 1 bis 8, **dadurch gekennzeichnet, dass** das Verkleidungselement (22) Befestigungselemente (18) zur Befestigung an einer Haltestruktur für die Verkleidung in dem Fahrzeug aufweist.
